# EUROPÄISCHE PATENTSCHRIFT

(11) **EP 0 711 231 B1**
(45) Veröffentlichungstag und Bekanntmachung des Hinweises auf die Patenterteilung: **28.10.1998**
(21) Anmeldenummer: 94924795.1
(22) Anmeldetag: 22.07.1994
(51) Int. Cl.: B60R 21/13

(54) **ÜBERROLLBÜGELEINRICHTUNG MIT INNENFÜHRUNG UND AUSSENFÜHRUNG**
ROLL BAR DEVICE WITH INTERNAL GUIDE AND EXTERNAL GUIDE
SYSTEME D'ARCEAU DE SECURITE AVEC GUIDAGE INTERIEUR ET GUIDAGE EXTERIEUR

(30) Priorität: 03.08.1993 DE 4326069; 13.12.1993 DE 4342400
(43) Veröffentlichungstag der Anmeldung: 15.05.1996
(73) Patentinhaber: ITT Automotive Europe GmbH, 60488 Frankfurt (DE)
(72) Erfinder: NOWACK, Reinhard, D-57489 Drolshagen (DE); LÖWEN, Jakob, D-51702 Bergneustadt (DE); Nass, Michael, D-51702 Bergneustadt (DE); Reuber, Gerhard, D-57489 Drolshagen (DE)
(74) Vertreter: Fuchs Mehler Weiss & Fritzsche
(86) Internationale Anmeldenummer: EP9402417
(87) Internationale Veröffentlichungsnummer: WO9503952

(56) Entgegenhaltungen:
- EP-A- 0 459 213
- EP-A- 0 504 482

## Beschreibung

Überrollbügeleinrichtungen dienen zum Schutz von Fahrzeuginsassen bei Fahrzeugen ohne schützendes Dach. Dabei sollen der bzw. die Überrollbügel im Normalzustand eingefahren sein, um den Windwiderstand und die Fahrgeräusche niedrig zu halten. Andererseits muß der Überrollbügel im Gefahrenfall, also bei einem drohenden Unfall, schnell ausgefahren werden, um zu verhindern, daß der Fahrer durch das sich überschlagende Fahrzeug erdrückt wird.

Hierfür gibt es eine ganze Reihe von Lösungen. Beispielsweise ist aus der EP-A-0 504 482 bekannt, je einem Bügel hinter den Rücksitzen des Fahrzeugs herauszufahren, um so für die Fahrzeuginsassen einen Schutz beim Überschlag des Fahrzeugs zu schaffen. Dieser vorbekannte Bügel dient insbesondere zum Schutz in sehr schweren Fahrzeugen. Deshalb wird mit Hilfe von Motorkraft ein herausgefahrener Bügel nach der Beendigung des Gefahrenzustandes teilweise oder zur Gänze durch Motorkraft in seine Ausgangslage zurückgefahren. Eine derartige Konstruktion ist vergleichweise aufwendig und teuer. Um ein schnelles Ausfahren im Crashfall zu ermöglichen, ist gemäß einer der Ausführungsformen ein Elektromotor vorgesehen, dessen Antriebswelle über zwei Zahnräder, je einen Zahnriemen und weitere zwei Zahnräder zwei Gewindespindeln antreibt. Eine derartige elektromotorische Betätigung hat zwar den Vorteil einer Selbsthemmung im ausgefahrenen Zustand, ist jedoch wie erwähnt sehr aufwendig.

Es hat daher Überlegungen gegeben, insbesondere für die Verwendung eines Überrollbügels in kleineren Fahrzeugen, diesen relativ leicht auszugestalten, so daß er mit vergleichsweise schwacher Federkraft aufgrund seiner geringen Trägheit hinreichend schnell herausgefahren werden kann. Diese geringe Spannkraft der Feder ermöglicht es andererseits, den Bügel nach Beendigung des Gefahrenzustands manuell in seine Ausgangslage zurückzudrücken, so daß hier eine aufwendige Motorförderung vermieden wird. Hierzu ist vorgeschlagen worden, die Seitenschenkel eines Überrollbügels in gehäusefesten Standrohren zu halten, deren Durchmesser erheblich geringer als die der Bügelschenkel sind, und die mit den Bügelschenkeln fluchten. Um eine verbesserte Innenführung bei herausfahrendem Bügel zu haben, ist am oberen Ende eines ortsfesten Gehäuses ein zylinderförmiger Halter vorgesehen, welcher mit einem schmalen Halteransatz an dem Gehäuse befestigt ist. Da die Befestigung des Haltezylinders außerhalb des Bügelschenkels liegt, der Halter aber selber an der Innenfläche des Bügelschenkels angreift, ist der Bügelschenkel selber mit Schlitzen versehen, so daß er über den Bügelhalter gleiten kann. Derartige Schlitze sind nicht nur teuer herzustellen, sondern vermindern auch die Festigkeit der Bügelschenkel, insbesondere gegenüber seitlichen Scherkräften.

Die Erfindung geht daher aus von einer Überrollbügeleinrichtung der sich aus dem Oberbegriff des Anspruchs 1 ergebenden Gattung mit der zugrundeliegenden Aufgabe, das vorgeschlagene System einerseits weiter zu vereinfachen, um derartige Überrollbügeleinrichtungen auch für kleinere Fahrzeuge einsetzbar zu machen und andererseits eine zuverlässige Verriegelung im ausgefahrenen Zustand auch ohne Elektromotor zu erzielen.

Die Aufgabe wird durch die sich aus dem kennzeichnenden Teil des Anspruchs 1 ergebende Merkmalskombination gelöst. Die Erfindung besteht im wesentlichen also darin zu verhindern, daß im Crashfall ein Rastelement gegenüber einer relativ zum Rastelement beweglichen Sperrklinke ausweichen kann und so die Haltewirkung des Bügels im Crashfall zu verstärken. Dabei ist die Kontur der Rastöffnung so gewählt, daß zwar die Sperrklinke die notwendige Schwenkbewegung durchführen kann, eine Schwenkbewegung des Rastelementes aber mit Sicherheit durch Anlage an der Innenfläche der Rastöffnung verhindert wird.

Eine besonders einfache Ausgestaltung für das Rastelement erhält man durch die Merkmale nach Anspruch 2. Da für die Funktionsfähigkeit des Rastelementes dessen Drehlage unwichtig ist, läßt sich ein derartiges Rastelement sehr leicht montieren.

Die Herstellung des Rastelementes läßt sich besonders preiswert durch die Maßnahmen nach Anspruch 3 durchführen, da hier ein einfacher Stahlzylinder ohne spanende Bearbeitung Verwendung finden kann.

Die rotationssymmetrische Form des Rastdorns ermöglicht aber auch eine Bearbeitung durch Drehen nach Anspruch 4.

Um die Lage der Schenkel zueinander besser zu fixieren, empfielt sich die Kombination der Merkmale nach Anspruch 5. Dabei werden die offenen Enden der Bügelschenkel bevorzugt durch entsprechende Öffnungen in der Verbindungsplatte umfaßt und so gegeneinander arretiert.

Eine zusätzliche Versteifung zwischen den Bügelschenkeln wird durch die Maßnahme nach Anspruch 6 erzielt. Hierdurch wird verhindert, daß die bevorzugt am unteren Ende der Bügelschenkel angebrachte Verbindungsplatte durch ein Drehmoment an den Bügelschenkeln ausknicken kann.

Die Merkmale nach Anspruch 7 dienen dazu, nach Beendigung des ausgefahrenen Zustandes des Überrollbügels und damit des Gefahrenzustandes des Kraftfahrzeugs den Bügel wieder in seine Ruhelage bringen zu können. Hierdurch ist es möglich, manuell den verrasteten Zustand der Überrollbügeleinrichtung aufzuheben und den Bügel manuell in seine Ruhelage zu drücken. Es liegt auf der Hand, daß durch diese Maßnahmen erhebliche Einsparungen gegenüber den motorisch bewegbaren bekannten Bügeln sich erreichen lassen.

Eine besonders einfache Konstruktion für das Halten des Bügels in seiner Ruhelage zeigen die Merkmale nach Anspruch 8. Dabei ist für das Halten des Bügels in seiner Ruhelage ein Schwenkhaken in einem Magnethalter am Führungsblock montiert.

Das Verankern des Bügels in seiner Ruhestellung wird durch die Maßnahme nach Anspruch 9 erleichtert. Dabei kann sich ohne besonderen Toleranzausgleich die Gabel durch ihre Schwenkbewegung in eine Haltevorrichtung einfädeln und dabei durch Montagefehler oder Fertigungsabweichungen bestehende Lageabweichungen der beiden miteinander zu verbindenden Teile ausgleichen. Soweit man Haltegabel und Gabelhalter aus Kunststoff fertigt, genügt es, daß der Haltestift selbt ein Stahlstift ist, um Abnutzungen in der genannten Halteeinrichtung stark herabzusetzen. Durch die Verwendung der Schelle wird sichergestellt, daß das Material am Basisschenkel des Überrollbügels durch die Befestigung des Gabelhalters nicht geschwächt wird und so die für den Crashfall notwendige Widerstandskraft behält.

Die Halteeinrichtung läßt sich in dem Führungsblock besonders raumsparend anordnen, indem die Merkmale nach Anspruch 10 angewendet werden. Durch den asymmetrischen Aufbau des Gabelhalters kann auch die Halteeinrichtung im Führungsblock asymmetrisch angeordnet werden, so daß die Rasteinrichtung und die Halteeinrichtung im Führungsblock in einer Ebene liegen können, was einen raumsparenden Aufbau ermöglicht.

Durch die Merkmale nach Anspruch 11 läßt sich die Toleranz der Führungsbohrung in dem Führungsblock sehr weit halten, indem zusätzlich noch die Elastizität der Führung gegenüber dem Bügel verbessert wird. Dabei wird man vorzugsweise die elastische Führungsbuchse derart ausgestalten, daß die im Crashfall auf die Mantelfläche der Bügelschenkel ausgeübten Kräfte sich möglichst weit verteilen und die Kerbwirkung auf ein Minimum herabgesetzt wird, so daß kein Abscheren oder Ausknicken der Schenkel bewirkt wird.

Einbau und Montage der Überrollbügeleinrichtung werden durch die Merkmale des Anspruchs 12 erleichtert. Dabei besteht das Gehäuseblech aus einem im wesentlichen U-förmigen Rahmen, dessen geschlossenes Ende durch ein Deckblech verstärkt ist, während die offenen Enden des U-förmigen Gehäusebleches über den Führungsblock miteinander verbunden sind. An dem Rahmen selber können noch Montageleisten befestigt sein oder einstückig aus dem Gehäuseblech herausgeformt sein.

Durch die oben beschriebenen Maßnahmen erhält man im wesentlichen eine einseitig offene Kassette, die leicht verbaubar ist. Zusätzlich wird durch den Basisschenkel des Gehäuseblechs der Weg der Verbindungsplatte (siehe Merkmale nach Anpruch 4) begrenzt, wobei um eine größere Auflagefläche der beiden Teile gegeneinander zu erzielen, Öffnungen in dem Gehäuse vorgesehen sein, welche passenden Vorsprüngen an der Verbindungsplatte entsprechen, wobei die Vorsprünge dann ungehindert durch die entsprechenden Öffnungen hindurchtreten und so die Anlage der beiden Platten gegeneinander ermöglichen.

Ein Ausführungsbeispiel der Erfindung wird nachfolgend anhand der Zeichnung erläutert. Dabei zeigt:
- Fig. 1: eine teilweise geschnittene Vorderansicht einer erfindungsgemäßen Überrollbügeleinrichtung im ausgefahrenen Zustand,
- Fig. 2: die Vorderansicht nach Fig. 1 im eingefahrenen Zustand,
- Fig. 3: eine geschnittene Seitenansicht der Überrollbügeleinrichtung im eingefahrenen Zustand gemäß Fig. 2 (dort Schnittlinie III-III) und
- Fig. 4: eine längs der Linie IV-IV geschnittene Draufsicht auf die Überrollbügeleinrichtung.

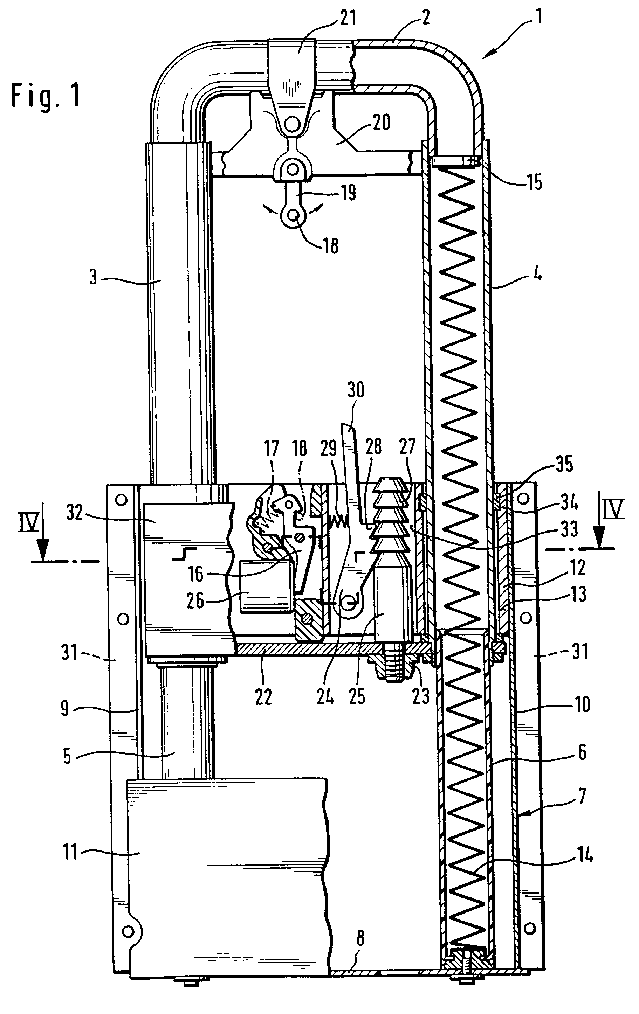

In Fig. 1 ist der Überrollbügel 1 gezeigt, welcher aus drei Rohren 2,3,4 zusammengesetzt ist. Dabei bildet den Basisschenkel des Überrollbügels 1 im wesentlichen ein gekrümmtes Rohr 2, welches an seinen Enden mit zwei Schenkelrohren 3,4 durch Schweißen oder andere geeignete Verbindungsarten starr verbunden ist.

Die Schenkelrohre 3,4 sind in zwei in Fig. 1 nach oben ragenden Standrohren 5,6 geführt. Die Standrohre 5,6 sind an einem im wesentlichen U-förmigen Gehäuse 7 verankert, welches ein Bodenblech 8 und zwei Seitenbleche 9,10 aufweist. Die beiden Seitenbleche 9,10 sind durch ein Deckblech 11 verstärkt und bilden eine einseitig offene Kassette. Am oberen offenen Ende der Seitenbleche 9,10 sind diese über einen Führungsblock 12 miteinander verbunden. Diese Kassette kann auch einstückig aus einer Platine gefertigt werden. Der Führungsblock 12 besitzt zwei Führungsbohrungen 13, die die Mantelfläche der Schenkelrohre 3,4 seitlich abstützen und eine sehr weit tolerierte Führung für die sich längs der Führungsbohrungen 13 bewegenden Schenkelrohre 3,4 bieten. Am oberen, dem gekrümmten Rohr 2 zugewandten Ende der Führungsbohrungen 13 ist eine radiale Ansenkung oder Ringnut 34 angelegt, welche eine ringförmige, radial elastische Führungsbuchse 35 aufnimmt, wodurch das radiale Spiel der Bügelschenkel 3,4 in den Führungsbohrungen 13 ausgeglichen wird. Zusätzlich ist für die Schenkelrohre noch eine innere Führung vorgesehen, die durch die gehäusefesten Standrohre 5,6 gewährleistet ist. Die Standrohre nehmen gleichzeitig auch noch eine Feder 14 auf, deren Ausknicken sie verhindern und die für eine Vorspannung des Bügels 1 gegenüber dem Gehäuse 7 in seiner Ruhelage sorgt und im Bedarfsfalle den Bügel 1 gegenüber dem Gehäuse schlagartig herausstößt. Dabei stützt sich die Feder 14 an ihrem einen Ende an dem Gehäuse 7 und an ihrem anderen (in Fig. 1 oberen) Ende an dem umlaufenden Rand des gekrümmten Rohres 2 über eine Stützscheibe 15 ab, die zusammen mit der Feder in das Schenkelrohr 4 bzw. 5 eingeführt wird.

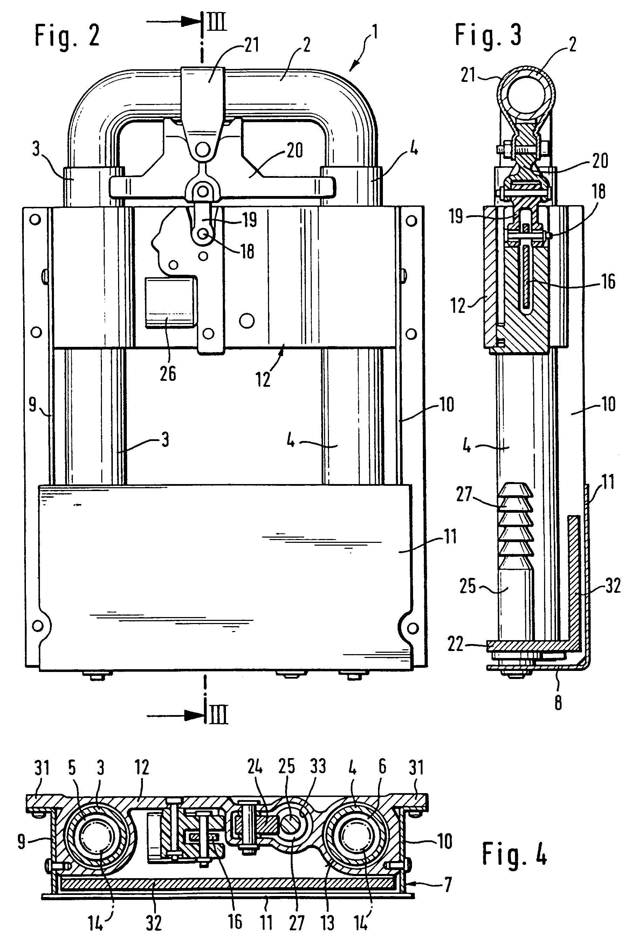

Um den Überrollbügel 1 im Ruhezustand in seiner in Fig. 2 dargestellten Ruhelage halten zu können, ist in dem Führungsblock 12 ein Magnethalter 40 vorgesehen, in welchem ein schwenkbarer Rasthebel 16 angeordnet ist, der durch eine in Fig. 1 gestrichelt angedeutete Vorspannfeder 17 im Uhrzeigersinn vorgespannt wird. Im Rastzustand ergreift der Rasthebel 16 einen Haltestift 18, wie dies in Fig. 1 angedeutet ist. Auf diese Weise hält der nachfolgend als Schwenkhaken bezeichnete Rasthebel 16 den Überrollbügel 1 in seiner Ruhelage. Dabei ist der Haltestift 18 in einer schwenkbaren Haltegabel 19, die etwa einen Schwenkwinkel von 2 - 3° erlaubt und einen Gabelhalter 20 sowie eine den Gabelhalter 20 mit dem gekrümmten Rohr 2 verbindende Schelle 21 gegenüber dem Überrollbügel 1 fixiert. Die Haltegabel 19 ist asymmetrisch gegenüber dem Überrollbügel 1 angeordnet, um Bauraum für eine nachfolgend zu beschreibende Rasteinrichtung zu schaffen, welche im Crashfall den Überrollbügel 1 in seiner ausgefahrenen Stellung halten und ein Eindrücken des Bügels verhindern soll. Hierzu sind die offenen Enden der Schenkelrohre 3,4 durch geeignete Maßnahmen lösbar oder unlösbar mit einer Verbindungsplatte 22 verbunden, so daß diese mit der Platte eine Einheit bilden. Auf der Platte ist wiederum lösbar oder unlösbar ein Rastdorn 25 befestigt. In Fig. 1 geschieht die Befestigung durch eine Bundmutter 23. Es sind aber auch andere Maßnahmen, wie Schweißen, Nieten, Pressen möglich. Ebenso ist in Fig. 1 die Verbindungsplatte 22 mit den Enden der Schenkelrohre 3,4 über Kreuzlochmuttern verschraubt. Auch hier können andere geeignete Befestigungsarten gewählt werden, bei denen allerdings auf die weiter unten beschriebene Materialauswahl Rücksicht zu nehmen ist.

Gegenüber dem als Rastelement dienenden und durch den Überrollbügel 1 geführten Rastdorn 25 ist in Fig. 1 im ausgefahrenen Zustand eine Sperrklinke 24 schwenkbar in einer Rastöffnung 33, im Führungsblock 12 also gehäusefest, gelagert. Damit führt der Rastdorn 25 bei einer Bewegung des Überrollbügels eine Bewegung gegenüber der Sperrklinke 24 aus. Im in Fig. 2 dargestellten eingefahrenen Zustand befindet sich der Rastdorn 25 im Bereich des Bodenblechs 8 und damit weit von dem Sperrklinke 24 entfernt. Wird allerdings der Rasthebel 16 durch einen im Magnethalter 40 befestigten Elektromagneten 26 entgegen dem Uhrzeigersinn gedreht, so wird der Überrollbügel 1 durch die Wirkung der Feder 14 in die in Fig. 1 dargestellte Endlage gebracht. Dabei fahren die Zähne 27 des Rastdorns 25 an den Rastzähnen 28 des Rasthebels 24 vorbei, bis der Überrollbügel 1 mit der Verbindungsplatte 22 am Führungsblock 12 seine Endstellung erreicht. Die unter der Vorspannung einer Spannfeder 29 stehende Sperrklinke 24 liegt in dieser Stellung an den Zähnen 27 des Rastdorns 25 an und verhindert so eine nach unten gerichtete Bewegung des Überrollbügels im Crashfall. Die Vielzahl von Rücksprüngen 7 im Rastdorn 25 ermöglicht eine Verriegelung auch dann, wenn der Überrollbügel 1 seine Endstellung nicht erreichen sollte.

Um ein z.B. manuelles Einschieben des Überrollbügels nach dem Ende des Gefahrenzustands zu ermöglichen, besitzt der Sperrhebel 24 einen manuell betätigten Schwenkhebel 30, der ohne Schwierigkeit einer Bedienungsperson im ausgefahrenen Zustand des Überrollbügels zugänglich ist, während im eingefahrenen Zustand der Schwenkhebel 30 vorzugsweise nicht bedient werden kann.

Wie aus Fig. 4 ersichtlich, kann der Führungsblock noch mit seitlichen Befestigungsansätzen 31 versehen sein, über die er sich z.B. an der Lehne eines Kraftfahrzeugsitzes sich befestigen läßt.

Hinsichtlich der Materialauswahl ist zu beachten, daß die erfindungsgemäße Überrollbügeleinrichtung einerseits sehr leicht sein soll, wobei insbesondere die schnell beweglichen Teile zur Herabsetzung ihrer Trägheit wenig Gewicht aufweisen sollten. Daher sind sowohl die den Überrollbügel 1 bildenden Rohre 3,4 sowie das gekrümmte Rohr 2, aber auch der Führungsblock 12, die Verbindungplatte 22 und die Seitenbleche 9 und 10 aus Aluminium gebildet. Dagegen sind der Rastdorn 25 und die Sperrklinke 24, aus Stahl gebildet. Entsprechendes gilt für das Deckblech 11 und den Schwenkhaken 16.

Der Gabelhalter 20 mit Haltegabel 19, die Standrohre 5,6 sowie der Magnethalter 40 sind vorzugsweise aus Kunststoff geformt.

Um die Steifigkeit der Verbindungplatte 22 zu erhöhen, besitzt sie einen senkrecht auf ihr stehenden und einstückig angeformten Seitenschenkel 32, der zusammen mit dem durch die Verbindungsplatte 22 gebildeten ersten Schenkel ein Winkelprofil ergibt.

## Patentansprüche

1. Überrollbügeleinrichtung mit einem Gehäuse (7), einem gehäusefesten Führungsblock (12) mit zwei Führungsbohrungen (13) zur äußeren Führung von zwei Schenkelrohren (3,4), die durch je ein eine durchgehende, in sich geschlossene Mantelfläche aufweisendes hohlzylinderförmiges Rohr gebildet sind, dadurch **gekennzeichnet,** zwei sich in Längsrichtung der Schenkelrohre des U-förmigen Überrollbügels (1) erstreckenden gehäusefesten Standrohren (5,6) zur inneren Führung je eines Schenkelrohres (3,4) des Bügels (1) und dadurch, daß der mit dem Bügel (1) verbundene Führungsblock (12) mit einer an die Kontur eines bügel- bzw. gehäusefesten Rastelements (25) und einer mit diesem zusammenwirkenden gehäuse- bzw. bügelfesten Sperrklinke (24) angepaßten, eine Schwenkbewegung der Sperrklinke (24) zulassenden Rastöffnung (33) versehen ist.

2. Überrollbügeleinrichtung nach Anspruch 4, dadurch **gekennzeichnet,** daß das Rastelement (25) ein gegenüber dem Bügel (1) fixierter, Rastdorn aus einem abriebfesten Material ist.

3. Überrollbügeleinrichtung nach Anspruch 5, dadurch **gekennzeichnet,** daß in den Rastdorn (25) Rücksprünge (7) durch ein Rollierverfahren eingerollt sind.

4. Überrollbügeleinrichtung nach Anspruch 5, dadurch **gekennzeichnet,** daß in den Rastdorn (25) Rücksprünge (7) eingedreht sind.

5. Überrollbügeleinrichtung nach einem der vorangegangenen Ansprüche, dadurch **gekennzeichnet,** daß die offenen Enden der Schenkelrohre (3,4) über eine Verbindungsplatte (22) unlösbar miteinander verbunden sind, wobei an der Verbindungsplatte (22) bevorzugt auch das Rastelement (25) befestigt ist.

6. Überrollbügeleinrichtung nach Anspruch 8, dadurch **gekennzeichnet,** daß die Verbindungsplatte (22) der erste Schenkel eines Verbindungswinkels ist, dessen senkrecht hierzu stehender zweiter Schenkel (32) in einer zum Bügel (1) parallelen Ebene liegt.

7. Überrollbügeleinrichtung nach einem der vorangegangenen Ansprüche, dadurch **gekennzeichnet,** daß die schwenkbare Sperrklinke (24) mit einem im ausgefahrenen Zustand des Bügels (1) manuell betätigbaren Schwenkhebel (30) versehen ist.

8. Überrollbügeleinrichtung nach einem der vorangegangenen Ansprüche, dadurch **gekennzeichnet,** daß ein über eine Vorspannfeder (17) in seiner Schwenkrichtung vorgespannter Rasthebel (16) in einem Magnethalter (40) gelagert ist, wobei der Rasthebel (16) im eingefahren Zustand des Bügels diesen über einen am Bügel (1) befestigten Haltestift (18) festhält.

9. Überrollbügeleinrichtung nach Anspruch 11, dadurch **gekennzeichnet,** daß der Haltestift (18) die verzweigten Enden einer Haltegabel (19) miteinander verbindet und daß die Haltegabel (19) um einen kleinen Winkel schwenkbar in einem Gabelhalter (20) gelagert ist, welcher wiederum über eine Schelle (21) am Basisabschnitt des U-förmigen Bügels (1) befestigt ist.

10. Überrollbügeleinrichtung nach Anspruch 12, dadurch **gekennzeichnet,** daß der Gabelhalter (20) sich seitlich an beiden Schenkelrohren (3,4) des Bügels abstützt und die Schelle (21) vorzugsweise asymmetrisch zu den Schenkelrohren (3,4) des Bügels (1) angeordnet ist.

11. Überrollbügeleinrichtung nach einem der vorangegangenen Ansprüche, dadurch **gekennzeichnet**, daß vorzugsweise in dem dem geschlossenen Ende des Bügels (1) zugewandten Ende des Bereichs der Führungsbohrung (13) eine ringförmige Nut oder Ansenkung (34) eingefügt ist, in die eine in radialer Richtung elastische Führungsbuchse (35) eingesetzt ist.

12. Überrollbügeleinrichtung nach einem der vorangegangenen Ansprüche, dadurch **gekennzeichnet,** daß ein im wesentlichen U-förmiges Gehäuseblech (8,9,10) vorgesehen ist, dessen Schenkel an seinem der gekrümmten Basis des Bügels abgewandten Ende durch ein Deckblech (11) verbunden sind und an seinem zur Basis gerichteten Ende über den Führungsblock (12) verbunden sind.

13. Überrollbügeleinrichtung nach Anspruch 15, dadurch **gekennzeichnet,** daß die durch die Bleche (8 - 11) gebildete Kassette durch ein Bodenblech (8) verschlossen ist, welches den Weg der Verbindungsplatte (22) begrenzt.

## Claims

1. Rollover bar device with a housing (7), a guide block (12), which is fixed to the housing and has two guide bores (13) for externally guiding two branch tubes (3, 4), which are each formed by a hollow cylindrical tube having a continuous, self-contained circumferential surface, characterised by two vertical tubes (5, 6), which extend in the longitudinal direction of the branch tubes of the U-shaped rollover bar (1) and are fixed to the housing, for internally guiding a respective branch tube (3, 4) of the bar (1), and in that the guide block (12), which is connected to the bar (1), is provided with a detent opening (33) adapted to the contour of a detent element (25), which is fixed to the bar or housing, and to the contour of a pawl (24), which co-operates with the element (25) and is fixed to the housing or bar, which opening allows the pawl (24) to execute a pivotal movement.

2. Rollover bar device according to claim 4, characterised in that the detent element (25) is a detent pin which is fixed with respect to the bar (1) and consists of an abrasion-resistant material.

3. Rollover bar device according to claim 5, characterised in that recesses (27) are crimped into the detent pin (25) by means of a rolling process.

4. Rollover bar device according to claim 5, characterised in that recesses (27) are turned into the detent rod (25).

5. Rollover bar device according to one of the preceding claims, characterised in that the open ends of the branch tubes (3, 4) are permanently connected together via a connecting plate (22), wherein the detent element (25) is preferably also secured to the connecting plate (22).

6. Rollover bar device according to claim 8, characterised in that the connecting plate (22) is the first leg of a connecting angle bracket whose second leg (32), which extends perpendicularly to the first, lies in a plane which is parallel to the bar (1).

7. Rollover bar device according to one of the preceding claims, characterised in that the pivotable pawl (24) is provided with a pivot lever (30) which can be manually operated when the bar (1) is in the extended state.

8. Rollover bar device according to one of the preceding claims, characterised in that a detent lever (16), which can be preloaded in its pivoting direction via a biasing spring (17), is mounted in a magnet holder (40), wherein the detent lever (16) retains the bar when the latter is in the retracted state via a holding pin (18) secured to the bar (1).

9. Rollover bar device according to claim 11, characterised in that the holding pin (18) connects the branched ends of a holding fork (19) together, and that the holding fork (19) is mounted in a fork holder (20) so as to be pivotable through a small angle, the holder (20) in turn being secured to the base section of the U-shaped bar (1) via a clip (21).

10. Rollover bar device according to claim 12, characterised in that the fork holder (20) is supported at the sides at both branch tubes (3, 4) of the bar, and the clip (21) is preferably disposed asymmetrically in relation to the branch tubes (3, 4) of the bar (1).

11. Rollover bar device according to one of the preceding claims, characterised in that an annular groove or counterbore (34) is preferably made in the end of the region of the guide bore (13) which faces the closed end of the bar (1), in which groove or bore a guide bush (35), which is resilient in the radial direction, is inserted.

12. Rollover bar device according to one of the preceding claims, characterised in that an essentially U-shaped housing plate (8, 9, 10) is provided, the legs of which plate are connected by a cover plate (11) at its end which is remote from the curved base of the bar and via the guide block (12) it its end which is directed towards the base.

13. Rollover bar device according to one of the preceding claims, characterised in that the box formed by the plates (8 - 11) is closed by a bottom plate (8) which limits the travel of the connecting plate (22).

## Revendications

1. Système d'arceau de sécurité avec un boîtier (7), un bloc de guidage (12) solidaire du boîtier avec deux trous de guidage (13) pour le guidage extérieur de deux tubes coudés (3, 4) qui sont formés respectivement par un tube en forme de cylindre creux présentant une paroi continue fermée en soi, **caractérisé en ce que** deux tubes verticaux (5,6), solidaires du boîtier, s'étendant en sens longitudinal des tubes coudés de l'arceau de sécurité (1) en forme de U pour le guidage intérieur d'un tube coudé (3, 4) respectif de l'arceau et en ce que le bloc de guidage (12) raccordé à l'arceau (1) est muni d'une ouverture d'arrêt (33) ajustée au contour d'un élément d'arrêt (25) solidaire du boîtier ou de l'arceau et d'un cliquet d'arrêt (24) solidaire du boîtier ou de l'arceau et coopérant avec cet élément, ouverture permettant un mouvement de pivotement du cliquet d'arrêt (24).

2. Système d'arceau de sécurité selon la revendication 1, **caractérisé en ce que** l'élément d'arrêt (25) est un mandrin d'arrêt fixé à l'opposé de l'arceau (1) et constitué d'un matériau résistant à l'usure.

3. Système d'arceau de sécurité selon la revendication 2, **caractérisé en ce que** des crans (27) sont moletés dans le mandrin d'arrêt (25) par un procédé de moletage.

4. Système d'arceau de sécurité selon la revendication 3, **caractérisé en ce que** les crans (27) sont réalisés par tournage dans le mandrin d'arrêt (25).

5. Système d'arceau de sécurité selon l'une des revendications précédentes, **caractérisé en ce que** les extrémités ouvertes des tubes coudés (4, 5) sont raccordées entre elles de façon amovible par une plaque de raccordement (22), l'élément d'arrêt (25) étant de préférence aussi fixé sur la plaque de raccordement (22).

6. Système d'arceau de sécurité selon la revendication 5, **caractérisé en ce que** la plaque de raccordement (22) est la première aile d'une équerre de raccordement, dont la deuxième aile (32) verticale et perpendiculaire à celle-ci se situe sur un niveau parallèle à l'arceau (1).

7. Système d'arceau de sécurité selon l'une des revendications précédentes, **caractérisé en ce que** le cliquet d'arrêt (24) pivotant est muni d'un levier de pivotement (30) pouvant être commandé manuellement à l'état sorti de l'arceau (1).

8. Système d'arceau de sécurité selon l'une des revendications précédentes, **caractérisé en ce qu'**un levier à crans (16) précontraint dans sa position de pivotement au moyen d'un ressort de précontrainte (17) est placé dans un support magnétique (40), le levier à crans (16) maintenant l'arceau (1) au moyen d'une tige de blocage (18) fixée à celui-ci à l'état rétracté.

9. Système d'arceau de sécurité selon la revendication 8, **caractérisé en ce que** la tige de blocage (18) raccorde entre elles les extrémités de branchement d'une fourche de maintien (19) et que la fourche de maintien (19) est placée de façon pivotante sur un petit angle dans un support de fourche (20), lequel est fixé lui-même par un collier de fixation (21) sur la section de base de l'arceau (1) en forme de U.

10. Système d'arceau de sécurité selon la revendication 9, **caractérisé en ce que** le support de la fourche (20) s'appuie latéralement sur les deux tubes coudés (3, 4) de l'arceau et que le collier de fixation (21) est placé de préférence de façon asymétrique aux tubes coudés (3, 4) de l'arceau (1).

11. Système d'arceau de sécurité selon l'une des revendications précédentes, **caractérisé en ce qu'**une rainure annulaire ou un chanfrein (34) est inséré de préférence dans l'extrémité de la partie du trou de guidage (13) tournée vers l'extrémité fermée de l'arceau (1), dans laquelle rainure est insérée une douille de guidage (35) élastique en sens radial.

12. Système d'arceau de sécurité selon l'une des revendications précédentes, **caractérisé en ce qu'**une tôle de boîtier (8, 9, 10) principalement en forme de U est prévue, dont les côtés sont reliés à l'extrémité opposée à la base coudée de l'arceau au moyen d'une coiffe (11), et à son extrémité dirigée vers la base par le bloc de guidage (12).

13. Système d'arceau de sécurité selon la revendication 12, **caractérisé en ce que** la cassette formée par les tôles (8-11) est fermée par une tôle de fond (8) qui limite le trajet de la plaque de raccordement (22).
